# EUROPÄISCHE PATENTSCHRIFT

(11) **EP 2 932 119 B1**
(45) Veröffentlichungstag und Bekanntmachung des Hinweises auf die Patenterteilung: **17.07.2019**
(21) Anmeldenummer: 13805408.5
(22) Anmeldetag: 16.12.2013
(51) Int. Cl.: F16C 33/46, F16C 33/50, F16C 19/36

(54) **WÄLZLAGER**
ROLLING BEARING
PALIER À ROULEMENT

(30) Priorität: 17.12.2012 DE 102012223317
(43) Veröffentlichungstag der Anmeldung: 21.10.2015
(73) Patentinhaber: Aktiebolaget SKF, 415 50 Göteborg (SE)
(72) Erfinder: HOFMANN, Sabine, 97072 Würzburg (DE); LIANG, Baozhu, 97456 Hambach (DE)
(74) Vertreter: Kuhstrebe, Jochen
(86) Internationale Anmeldenummer: PCT/EP2013/076718
(87) Internationale Veröffentlichungsnummer: WO 2014/095732

(56) Entgegenhaltungen:
- WO-A1-2011/031931
- WO-A2-2012/076583
- WO-A2-2012/092107
- DE-A1-102011 004 374

## Beschreibung

Die Erfindung betrifft ein Wälzlager mit mindestens einem Innenring und mindestens einem Außenring, wobei zwischen den Lagerringen eine Anzahl Wälzkörper angeordnet sind, wobei die Wälzkörper durch einen Käfig gehalten werden, wobei der Käfig aus einer Anzahl Käfigsegmenten besteht, wobei jedes Käfigsegment zwei Wälzkörper an mindestens zwei der Form des Wälzkörpers angepassten Kontaktflächen berührt, ohne den Wälzkörper rahmenartig einzufassen, wobei an jedem Käfigsegment mindestens ein Befestigungselement angeordnet ist, wobei die Käfigsegmente über ein Kopplungselement zumindest zeitweise verbindbar sind, wozu das Kopplungselement mit den Befestigungselementen in Eingriff gebracht wird, wobei jedes Käfigsegment an seinen axialen Enden jeweils ein Endelement mit einer Stirnfläche zur axialen Anlage des Wälzkörpers aufweist, wobei die beiden axial endseitig angeordneten Endelemente mit einem Trägerelement (Verbindungsbalken) miteinander verbunden sind und wobei am Trägerelement mindestens ein Führungselement angeordnet ist, das eine der Form des Wälzkörpers angepasste Kontaktfläche aufweist und wobei ein radial innenliegendes Ende des mindestens einen Führungselements von der Laufbahn des Innenrings einen größeren Abstand aufweist, als der Abstand zwischen den radial innenliegenden Ende des Endelements und einer Schulterfläche am Innenring.

Ein Wälzlager dieser Art offenbart die WO 2011/031931 A1. Ähnliche Lösungen zeigen die WO 2012/092107 A1**,** die JP 0924 2759 A**,** die DE 69 18 881 U und die US 2 534 379.

Ein anderes Wälzlager ist aus der WO 2012/076583 A2 bekannt. Statt eines klassischen einstückigen Lagerkäfigs wird hier - wie bei den oben genannten Lösungen - der Käfig durch eine Anzahl Käfigsegmente gebildet. Dies hat den Vorteil, dass eine besonders gute Eignung für große Kegelrollenlager besteht und die hier auftretenden Belastungen besonders gut aufgenommen werden können. Des Weiteren können die einzelnen Käfigsegmente gut montiert werden; gleichzeitig kann ein geringes Käfiggewicht erreicht werden. Die Ausbildung der Käfigsegmente ermöglicht eine sichere Aufnahme des Wälzkörpers und eine zuverlässige Führung des Käfigsegments am Wälzkörper. Die Käfigsegmente kommen dabei bei bestimmungsgemäßer Benutzung nicht in Berührung; sie sind nicht miteinander verbunden. Jede Kegelrolle wird dabei von einer rahmenartigen Struktur umgeben, die durch das Käfigsegment gebildet wird.

Weitere Lösungen zeigen die DE 10 2011 004 374 A1, die DE 100 49 578 A1, die DE 36 35 261 A1, die DE 41 03 672 C2, die DE 10 2010 015 085 A1 und die DE 10 2009 012 241 A1.

Nach dem Zusammenbau des Lagers muss dieses allerdings als Einheit gehandhabt werden, da der Lageraußenring und der Lagerinnenring nicht separiert werden können, ohne dass das Lager auseinanderfallen würde. Dies ergibt sich durch den konzeptionellen fehlenden Verbund der einzelnen Käfigsegmente untereinander. Das Lager muss also als komplette Einheit transportiert und verbaut werden. Dies ist unter gewissen Umständen nachteilig und schränkt die Vorteile der Käfigsegment-Bauweise ein. Des weiteren sind die Kosten bei der Herstellung der vorbekannten Käfigsegmente relativ hoch. Schließlich bestehen hinsichtlich der Flexibilität des Einsatzes derselben gewisse Einschränkungen.

Der Erfindung liegt die Aufgabe zugrunde, ein gattungsgemäßes Lager so fortzubilden, dass die genannten Nachteile eliminiert bzw. vermindert werden können. Demgemäß soll die Handhabung des Lagers, insbesondere während dessen Montage, in einfacher Weise verbessert bzw. erleichtert werden. Ferner soll ein gattungsgemäßes Lager so fortgebildet werden, dass eine noch preiswertere Herstellung möglich ist; gleichermaßen soll die Flexibilität des Einsatzes erhöht werden. Schließlich soll eine zuverlässige Führung des Käfigsegments sichergestellt werden.

Die **Lösung** dieser Aufgabe durch die Erfindung ist dadurch gekennzeichnet, dass an oder auf dem Kopplungselement mindestens ein Abstandselement angeordnet ist, das eine relative Beweglichkeit zwischen dem Kopplungselement und dem mindestens einen Befestigungselement begrenzt.

Das Kopplungselement ist dabei bevorzugt ein Zugkräfte übertragendes, aber weitgehend biegeschlaffes Bauteil. Hierbei ist insbesondere an ein Seil gedacht.

Die Befestigungselemente sind bevorzugt als Ösen ausgebildet, durch die das Kopplungselement durchgefädelt werden kann. Die Befestigungselemente sind dabei vorzugsweise einstückig am Käfigsegment angeformt.

Eine Alternative sieht vor, dass die Befestigungselemente als jeweils zwei zusammenwirkende hakenförmige Elemente ausgebildet sind, die das Kopplungselement an sich gegenüberliegenden Umfangsabschnitten greifen.

Das Käfigsegment ist bevorzugt als einstückiges Bauteil ausgebildet. Es kann alternativ aber auch aus mehreren miteinander verbundenen Teilen zusammengesetzt sein.

Es kann aus Kunststoff bestehen. Möglich ist es aber auch, dass die Käfigsegmente aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt. Als Material, das diese Eigenschaft aufweist, hat sich insbesondere Gusseisen erwiesen, das mit Vorteil eingesetzt wird.

Das Wälzlager ist insbesondere ein Rollenlager, vorzugsweise ein Kegelrollenlager, ein Zylinderrollenlager oder ein Pendelrollenlager.

Eine Weiterbildung sieht vor, dass an oder auf dem Kopplungselement mindestens ein Abstandselement angeordnet ist. Mit diesem kann die relative Beweglichkeit zwischen dem Kopplungselement und mindestens einem Befestigungselement in Umfangsrichtung begrenzt werden. Additiv oder alternativ dient das Abstandselement auch dazu, den Abstand zwischen zwei benachbarten Käfigsegmenten konstant zu halten. Die Bewegungsmöglichkeit der einzelnen Käfigsegmente relativ zueinander und in Umfangsrichtung kann so definiert bzw. eingestellt werden.

Die Erfindung stellt demgemäß auf ein vorzugsweise rollengeführtes Käfigsegment ab. Im Fall von Verkippung des Käfigsegments kann dieses über die Flanken an der Stirnseite (radial innenliegendes Ende des Endelements) auf der Schulter eines Lagerringes geführt werden. Das Käfigsegment soll indes nicht auf der Laufbahn abgestützt werden. Um dies zu erreichen, muss ein definierter Abstand zwischen der (radial innenliegenden) Stirnseite des Käfigsegments (Endelement) und dem Innenring-Bord kleiner sein als der Abstand zwischen dem Stegfortsatz (Führungselement) und der Innenring-Laufbahn (s. hierzu die obige Angabe).

Die Käfigsegmente stellen Abstandshalter zwischen zwei Wälzkörpern dar. Die Käfigsegmente (Käfig-Spacer) dienen somit lediglich als Trennelemente zwischen den Wälzkörpern. Die Käfigsegmente werden abwechselnd mit den Wälzkörpern im Lager verbaut; demgemäß entspricht die Anzahl der Käfigsegmente derjenigen der Wälzkörper.

Durch das vorgesehene Kopplungselement (Seil) entsteht ein verliersicherer Verbund zwischen Wälzkörpern und Käfig auf dem Innenring.

Um das Herausrutschen des Käfigsegments in axiale Richtung zu verhindern, sind die Endelemente mit ihren Stirnflächen vorgesehen, die einen axialen Anschlag bzw. eine axiale Abstützung für die Wälzkörper bilden.

Dabei ist es nicht zwingend, dass das Endelement symmetrisch zu einer radial verlaufenden und die Achse aufweisenden Ebene ausgebildet ist. Es ist auch möglich, dass das Endelement mit seiner Stirnfläche nur - in Umfangsrichtung gesehen - zu einer Seite reicht und folglich nur für einen einzigen Wälzkörper eine axiale Anlage darstellt. Die axiale Anlage für den benachbarten Wälzkörper wird dann vom Endelement des benachbarten Käfigsegments gebildet.

Die Führungselemente am Käfigsegment, die der Führung der Wälzkörper dienen, haben bevorzugt eine kreisabschnittsförmige konkave Oberfläche, um einen geeigneten Kontakt zwischen dem Wälzkörper und dem Käfigelement herzustellen. Zudem kann hierdurch das Herausfallen der Wälzkörper in radiale Richtung verhindert werden, sobald der Verbund von Wälzkörpern, Käfig und Innenring hergestellt ist.

Durch den Einsatz einzelner separater Käfigsegmente wird die Flexibilität des Rollenkäfigverbunds vorteilhaft erhöht. Mit der vorgeschlagenen Lösung wird also der Grad der Flexibilität des Käfigsystems weiter erhöht.

Ferner ist es möglich, die Kosten zu reduzieren, da Spritzgießwerkzeuge eingesetzt werden können, die einen kleineren Bauraum benötigen als bei vorbekannten Lösungen.

Da sich die Wärmeausdehnungskoeffizienten von Stahl und Kunststoff - aus dem die Käfigsegmente grundsätzlich gefertigt sein können - typischerweise unterscheiden, muss das Endspiel zwischen den Käfigsegmenten größer gestaltet werden, was sich für eine maximale Tragzahl nachteilig auswirken kann. Daher betrifft ein weiterer Aspekt der vorliegenden Erfindung die Werkstoffwahl für die Käfigsegmente. Dieser ist bevorzugt so gewählt, dass der Werkstoff des Käfigsegments einen ähnlichen Wärmeausdehnungskoeffizienten wie Stahl hat. Das gewählte Material des Käfigsegments sollte hierbei einen Wärmedehnungskoeffizienten von 10 x 10⁻⁶ bis 13 x 10⁻⁶ 1/K liegen (bei Stahl liegt er bei 11,5 x 10⁻⁶ 1/K). Wie oben ausgeführt, hat sich Gusseisen als Werkstoff für die Käfigsegmente bewährt; dieses Material erfüllt die genannte Bedingung. Dies ermöglicht es, bei der Auslegung des Rollen-Endspiels engere Abstände zuzulassen, da die Wärmeausdehnung von Ringen und Käfigsegmenten ähnlich ist. Dies unterstützt eine sichere Handhabung des Innenrings mit montiertem Rollensatz, aber ohne Außenring. Die Verwendung eines solchen Werkstoffs, der eine dem Stahl ähnliche Wärmeausdehnung hat, ermöglicht also ein geringes Endspiel innerhalb des Rolle-Käfig-Verbunds, was sowohl für das Halten der Rollen auf dem Innenring, als auch für die Leistungsfähigkeit des Lagers von Vorteil ist.

Die erfindungsgemäße Ausgestaltung bietet die Möglichkeit, das Lager für den Einbau zu zerlegen, d. h. im Falle von Kegelrollenlagern den Innenring plus Rollensatz vom Außenring zu trennen, ohne dass die Lagerkomponenten auseinanderfallen. Die Käfigsegmente sind also selbsthaltend. Die Erfindung sieht insoweit also vor, dass die Käfigsegmente mit einer zusätzlichen Haltevorrichtung versehen wird, die zur Verbindung der einzelnen Segmente miteinander dient und es so verhindert, dass sich der Rollen-Käfig-Verbund im zusammengebauten Zustand vom Innenring lösen kann.

Zur Verbindung der einzelnen Käfigsegmente miteinander sind also - wie erläutert - bevorzugt an den Stirnseiten der Käfigsegmente Haltevorrichtungen angebracht, an denen beispielsweise ein Seil befestigt werden kann. Durch diese Verbindung der einzelnen Käfigsegmente wird der Rollen-Käfig-Verbund hergestellt, so dass der Rollensatz samt Käfigsegmenten gesichert gegen Auseinanderfallen auf dem Lagerinnenring sitzt.

Das Seil kann dabei nur solange eingebaut bleiben, bis die endgültige Montage des Lagers durchgeführt wird; es kann dann entfernt werden, weil es für den Betrieb des Lagers nicht benötigt wird. Es kann aber auch genauso vorgesehen werden, dass das Seil permanent montiert bleibt.

Das Seil als Kopplungselement ist bevorzugt, allerdings sind auch andere Lösungen denkbar, beispielsweise eine Schraubverbindung, die zwischen zwei benachbarten Käfigsegmenten wirksam angeordnet ist.

Damit kann in vorteilhafter Weise durch das Anbringen des Kopplungselements (Seil) an den Befestigungselementen der aus Segmenten bestehende Käfig samt Rollen mit dem Lagerinnenring unverlierbar verbunden und separat zum Außenring in die Anwendung eingebaut werden. Der Einbau des Lagers wird entsprechend einfacher.

In der Zeichnung ist ein Ausführungsbeispiel der Erfindung dargestellt. Es zeigen:
- Fig. 1: in perspektivischer Darstellung ein Käfigsegment eines Käfigs eines Kegelrollenlagers,
- Fig. 2: einen Radialschnitt durch ein Kegelrollenlagers, wobei zwischen zwei Kegelrollen ein Käfigsegment nach Fig. 1 angeordnet ist, und
- Fig. 3: eine stirnseitige Ansicht einer Anzahl Kegelrollen mit zwischen ihnen angeordneten Käfigsegmenten.

In den Figuren ist für die Anwendung in einem Kegelrollenlager das erfindungsgemäße Konzept illustriert.

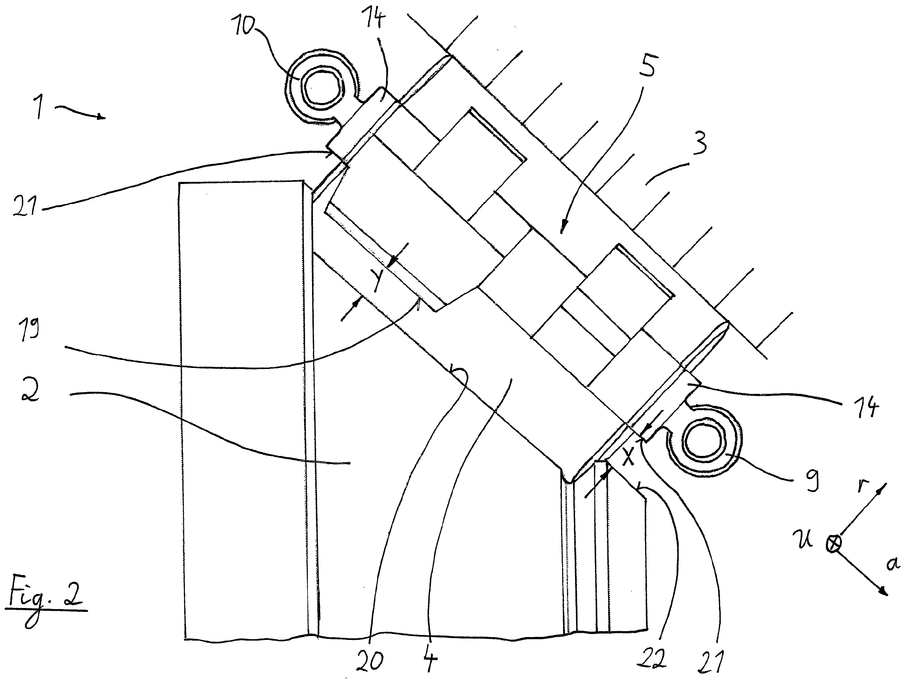

In Fig. 2 ist zu sehen, dass das Wälzlager 1 einen Innenring 2 und einen Außenring 3 umfasst, die relativ zueinander drehen können, wobei zwischen den Ringen Wälzkörper 4 - vorliegend Kegelrollen - angeordnet sind. Die Wälzkörper 4 werden von einem Käfig gehalten.

In den Figuren sind die axiale Richtung a der Wälzkörper 4, die radiale Richtung r der Wälzkörper 4 sowie die Umfangsrichtung U angegeben.

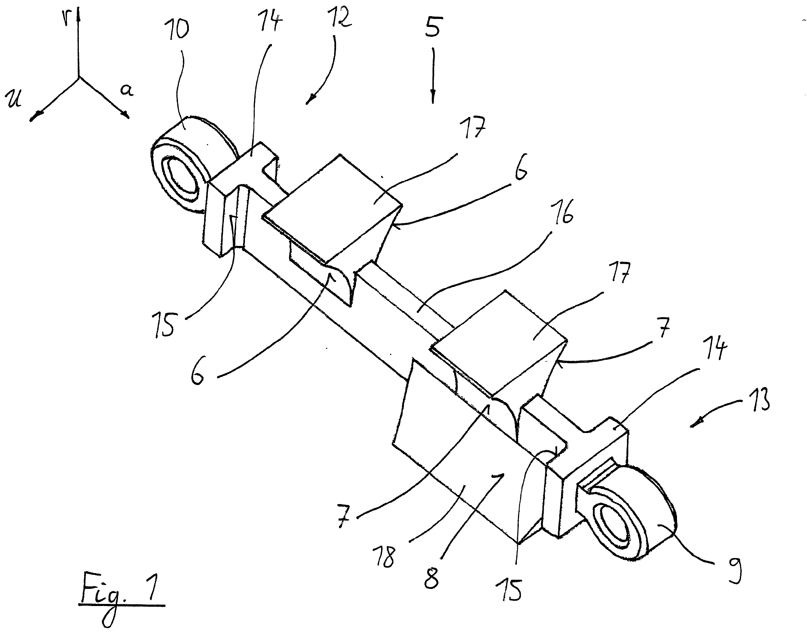

Der Käfig ist nicht einstückig ausgebildet, sondern er wird durch eine Anzahl separater Käfigsegmente 5 gebildet. Ein solches Käfigsegment 5 ist in Fig. 1 perspektivisch dargestellt. Das Käfigsegment 5 ist bezüglich einer sich in radiale Richtung r erstreckende und die Achse a aufweisende Mittenebene symmetrisch. Hiernach besteht jedes Käfigsegment 5 aus einem balkenartigen Trägerelement 16, an dem im Ausführungsbeispiel zwei radial außenliegend angeordnete Führungselemente 17 und ein radial innenliegendes Führungselement 18 angeordnet sind. Die Führungselemente 17, 18 weisen konkave Kontaktflächen 6, 7 und 8 auf, die der Form der Wälzkörper 4 an der jeweiligen Stelle angepasst sind.

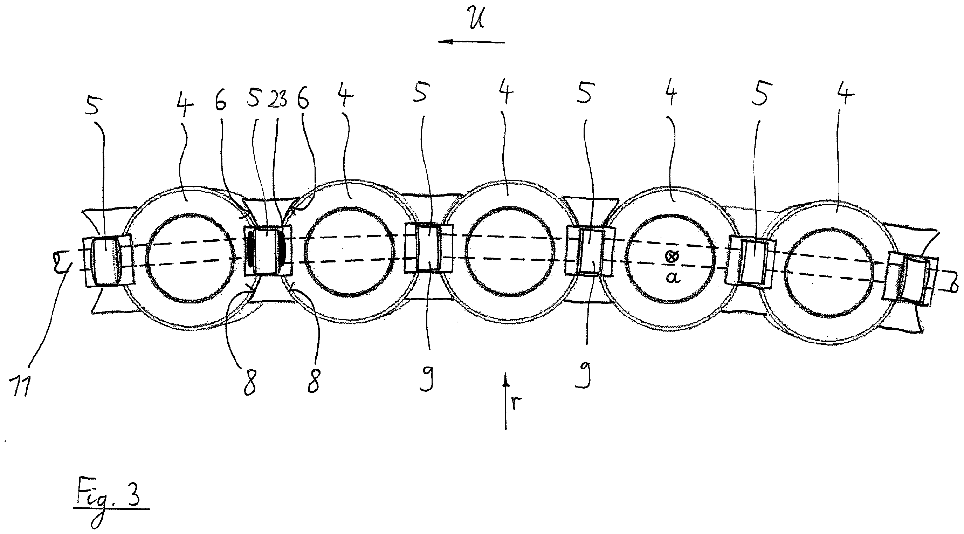

Damit die Wälzkörper 4 in der Käfiganordnung, bestehend aus den einzelnen Käfigsegmenten 5, auch bei demontiertem Außenring 3 zusammen mit dem Innenring 2 einen unverlierbaren Verbund bilden, ist an den axialen Enden 12 und 13 (s. Fig. 1) Befestigungselemente 9 und 10 angeformt, die im Ausführungsbeispiel als ösenförmige Anformungen an den axialen Enden des Käfigsegments 5 ausgebildet sind. Durch die ösenförmigen Befestigungselemente 9, 10 ist ein Kopplungselement 11 in Form eines Seils eingezogen (dargestellt mit gestrichelten Linien in Fig. 3). Nach Spannen des Seils 11 liegt ein Verbund der einzelnen Käfigsegmente 5 vor, so dass der unverlierbare Verbund von Käfigelementen 5 samt Wälzkörpern 4 und Innenring 2 hergestellt ist, auch wenn der Außenring 3 entfernt ist.

Im Ausführungsbeispiel sind die Befestigungselemente 9 und 10 als vollständige Öse ausgebildet. Es kann aber auch vorgesehen sein, dass hier eine andere Ausgestaltung gewählt wird. Insbesondere können die Befestigungselemente 9, 10 als unterbrochene Öse ausgebildet werden, so dass das Seil 11 von der Seite aus eingehakt werden kann.

Um einen axialen Verbund zwischen Käfigsegmenten 5 und Wälzkörpern 4 sicherzustellen, weisen die Käfigelemente 5 im Bereich ihrer axialen Enden 12, 13 jeweils ein Endelement 14 auf, das eine Stirnfläche 15 (s. Fig. 1) bildet, die zur axialen Anlage der Wälzkörper 4 ausgebildet und vorgesehen ist. Damit wird verhindert, dass das Käfigsegment 5 axial aus dem Lager 1 herausrutschen kann (wenn das Seil 11 entfernt ist).

Die einzelnen Käfigsegmente 5 sind rollengeführt. Im Falle einer Verkippung eines Käfigsegments 5 kann dieses im Bereich der axialen Enden 12, 13 mit dem radial innenliegenden Ende 21 des Endelements 14 an einer Schulterfläche 22 des Innenrings 2 anliegen und somit geführt werden (s. hierzu Fig. 2). Der sich hier ergebende Abstand X zwischen radial innenliegendem Ende 19 und Schulterfläche 22 ist dabei geringer gewählt, als der Abstand Y zwischen dem radial innenliegenden Ende 19 des Führungselements 18 und der Laufbahn 20 des Innenrings 2.

In Fig. 3 ist noch folgendes zu erkennen: Exemplarisch ist für nur eine einzige Umfangsstelle des Lagers skizziert, dass Abstandselemente 23 vorgesehen werden können. Diese Abstandselemente 23 sind im Ausführungsbeispiel nach Art eines O-Ring ausgebildet, auf das Seil 11 aufgeschoben und bewirken, dass eine relative Verschieblichkeit in Umfangsrichtung U zwischen dem Seil 11 und dem Befestigungselement 9, 10 verhindert wird. Die Käfigsegmente können sich demgemäß nicht in Um-fangsrichtung "zusammenschieben".

Zur genauen Zählung der Führungselemente 17, 18 und der Kontaktflächen 6, 7, 8 sei folgendes bemerkt: Zwingend ist lediglich eines der Führungselemente 17 bzw. 18. Es kann ausreichend sein, ein Führungselement 17 vorzusehen, das mittig auf dem Trägerelement 16 angeordnet ist. Im Ausführungsbeispiel sind zwei Führungselemente 17 und ein Führungselement 18 vorgesehen. Jedes Führungselement 17, 18 hat zwei Kontaktflächen 6, 7 bzw. 8. Dies ergibt sich daraus, dass ein Führungselement 17, 18 Anlaufflächen für die beiden benachbarten Wälzkörper 4 aufweisen muss. Im Ausführungsbeispiel liegen also drei Führungselemente mit sechs Kontaktflächen vor.

Indes ist als minimale Lösung ein Käfigsegment 5 vorzusehen, das ein einziges Führungselement aufweist, das dann zwei voneinander weg weisende Kontaktflächen hat.

### Bezugszeichenliste

- 1: Wälzlager
- 2: Innenring
- 3: Außenring
- 4: Wälzkörper
- 5: Käfigsegment
- 6: Kontaktfläche
- 7: Kontaktfläche
- 8: Kontaktfläche
- 9: Befestigungselement
- 10: Befestigungselement
- 11: Kopplungselement (Seil)
- 12: axiales Ende
- 13: axiales Ende
- 14: Endelement
- 15: Stirnfläche
- 16: Trägerelement
- 17: Führungselement
- 18: Führungselement
- 19: radial innenliegendes Ende des Führungselements
- 20: Laufbahn des Innenrings
- 21: radial innenliegendes Ende des Endelements
- 22: Schulterfläche
- 23: Abstandselement
- U: Umfangsrichtung
- a: axiale Richtung
- r: radiale Richtung
- X: Abstand
- Y: Abstand

## Patentansprüche

1. Wälzlager (1) mit mindestens einem Innenring (2) und mindestens einem Außenring (3), wobei zwischen den Lagerringen (2, 3) eine Anzahl Wälzkörper (4) angeordnet sind, wobei die Wälzkörper (4) durch einen Käfig gehalten werden, wobei der Käfig aus einer Anzahl Käfigsegmenten (5) besteht, wobei jedes Käfigsegment (5) zwei Wälzkörper (4) an mindestens zwei der Form des Wälzkörpers (4) angepassten Kontaktflächen (6, 7, 8) berührt, ohne den Wälzkörper (4) rahmenartig einzufassen, wobei an jedem Käfigsegment (5) mindestens ein Befestigungselement (9, 10) angeordnet ist, wobei die Käfigsegmente (5) über ein Kopplungselement (11) zumindest zeitweise verbindbar sind, wozu das Kopplungselement (11) mit den Befestigungselementen (9, 10) in Eingriff gebracht wird, wobei jedes Käfigsegment (5) an seinen axialen Enden (12, 13) jeweils ein Endelement (14) mit einer Stirnfläche (15) zur axialen Anlage des Wälzkörpers (4) aufweist, wobei die beiden axial endseitig (12, 13) angeordneten Endelemente (14) mit einem Trägerelement (16) miteinander verbunden sind, wobei am Trägerelement (16) mindestens ein Führungselement (17, 18) angeordnet ist, das eine der Form des Wälzkörpers (4) angepasste Kontaktfläche (6, 7, 8) aufweist, und wobei ein radial innenliegendes Ende (19) des mindestens einen Führungselements (18) von der Laufbahn (20) des Innenrings (2) einen größeren Abstand (Y) aufweist, als der Abstand (X) zwischen dem radial innenliegenden Ende (21) des Endelements (14) und einer Schulterfläche (22) am Innenring (2),
**dadurch gekennzeichnet, dass**
an oder auf dem Kopplungselement (11) mindestens ein Abstandselement (23) angeordnet ist, das eine relative Beweglichkeit zwischen dem Kopplungselement (11) und dem mindestens einen Befestigungselement (9; 10) in Umfangsrichtung begrenzt.

2. Wälzlager nach Anspruch 1, **dadurch gekennzeichnet, dass** das Kopplungselement (11) ein Zugkräfte übertragendes, aber weitgehend biegeschlaffes Bauteil ist.

3. Wälzlager nach Anspruch 2, **dadurch gekennzeichnet, dass** das Kopplungselement (11) ein Seil ist.

4. Wälzlager nach einem der Ansprüche 1 bis 3, wobei das Abstandselement nach Art eines O-Rings ausgebildet ist, das auf das Kopplungselement aufgeschoben ist.

5. Wälzlager nach einem der Ansprüche 1 bis 4, **dadurch gekennzeichnet, dass** die Befestigungselemente (9, 10) als Ösen ausgebildet sind, durch die das Kopplungselement (11) durchgefädelt werden kann.

6. Wälzlager nach einem der Ansprüche 1 bis 5, **dadurch gekennzeichnet, dass** die Befestigungselemente (9, 10) einstückig am Käfigsegment (5) angeformt sind.

7. Wälzlager nach einem der Ansprüche 1 bis 6, **dadurch gekennzeichnet, dass** das Käfigsegment (5) als einstückiges Bauteil ausgebildet ist.

8. Wälzlager nach einem der Ansprüche 1 bis 7, **dadurch gekennzeichnet, dass** das Käfigsegment (5) aus Kunststoff besteht.

9. Wälzlager nach einem der Ansprüche 1 bis 7, **dadurch gekennzeichnet, dass** die Käfigsegmente (5) aus einem Material bestehen, dessen Wärmeausdehnungskoeffizient einen Wert aufweist, der in einem Toleranzband von +/- 15 %, verglichen mit dem Wärmeausdehnungskoeffizienten von Stahl liegt, wobei die Käfigsegmente (5) insbesondere aus Gusseisen bestehen.

10. Wälzlager nach einem der Ansprüche 1 bis 9, **dadurch gekennzeichnet, dass** es ein Rollenlager ist, vorzugsweise ein Kegelrollenlager, ein Zylinderrollenlager oder ein Pendelrollenlager.

## Claims

1. Anti-friction bearing (1) having at least one inner ring (2) and at least one outer ring (3), a number of rolling bodies (4) being arranged between the bearing rings (2, 3), the rolling bodies (4) being held by way of a cage, the cage consisting of a number of cage segments (5), each cage segment (5) making contact with two rolling bodies (4) on at least two contact faces (6, 7, 8) which are adapted to the shape of the rolling body (4), without surrounding the rolling body (4) in a frame-like manner, at least one fastening element (9, 10) being arranged on each cage segment (5), it being possible for the cage segments (5) to be connected at least temporarily via a coupling element (11), to which end the coupling element (11) is brought into engagement with the fastening elements (9, 10), each cage segment (5) having, at its axial ends (12, 13), in each case one end element (14) with an end face (15) for axial bearing of the rolling body (4), the two end elements (14) which are arranged axially on the end side (12, 13) being connected to one another by way of a carrier element (16), at least one guide element (17, 18) being arranged on the carrier element (16), which guide element (17, 18) has a contact face (6, 7, 8) which is adapted to the shape of the rolling body (4), and a radially inner end (19) of the at least one guide element (18) being at a greater spacing (Y) from the raceway (20) of the inner ring (2) than the spacing (X) between the radially inner end (21) of the end element (14) and a shoulder face (22) on the inner ring (2), **characterized in that** at least one spacer element (23) is arranged at or on the coupling element (11), which spacer element (23) limits a relative movability between the coupling element (11) and the at least one fastening element (9; 10) in the circumferential direction.

2. Anti-friction bearing according to Claim 1, **characterized in that** the coupling element (11) is a component which transmits tensile forces but is largely flexurally slack.

3. Anti-friction bearing according to Claim 2, **characterized in that** the coupling element (11) is a cable.

4. Anti-friction bearing according to one of Claims 1 to 3, the spacer element being configured in the manner of an O-ring which is pushed onto the coupling element.

5. Anti-friction bearing according to one of Claims 1 to 4, **characterized in that** the fastening elements (9, 10) are configured as eyes, through which the coupling element (11) can be threaded.

6. Anti-friction bearing according to one of Claims 1 to 5, **characterized in that** the fastening elements (9, 10) are moulded integrally on the cage segment (5).

7. Anti-friction bearing according to one of Claims 1 to 6, **characterized in that** the cage segment (5) is configured as a single-piece component.

8. Anti-friction bearing according to one of Claims 1 to 7, **characterized in that** the cage segment (5) consists of plastic.

9. Anti-friction bearing according to one of Claims 1 to 7, **characterized in that** the cage segments (5) consist of a material, the coefficient of thermal expansion of which has a value which lies in a tolerance band of ±15%, in comparison with the coefficient of thermal expansion of steel, the cage segments (5) consisting, in particular, of cast iron.

10. Anti-friction bearing according to one of Claims 1 to 9, **characterized in that** it is a roller bearing, preferably a tapered roller bearing, a cylindrical roller bearing or a self-aligning roller bearing.

## Revendications

1. Palier à roulement (1) comprenant au moins une bague intérieure (2) et au moins une bague extérieure (3), plusieurs éléments roulants (4) étant disposés entre les bagues de palier (2, 3), les éléments roulants (4) étant maintenus par une cage, la cage comprenant un certain nombre de segments de cage (5), chaque segment de cage (5) étant en contact avec deux éléments roulants (4) au niveau d'au moins deux surfaces de contact (6, 7, 8) adaptées à la forme de l'élément roulant (4) sans encadrer les éléments roulants (4), au moins un élément de fixation (9, 10) étant disposé au niveau de chaque segment de cage (5), les segments de cage (5) pouvant être reliés au moins temporairement par un élément d'accouplement (11), ce pour quoi l'élément d'accouplement (11) est amené en engagement avec les éléments de fixation (9, 10), chaque segment de cage (5) comportant à chacune de ses extrémités axiales (12, 13) un élément d'extrémité (14) pourvu d'une face d'extrémité (15) destinée au contact axial de l'élément roulant (4), les deux éléments d'extrémité (14) disposés axialement au niveau des extrémités (12, 13) étant reliés l'un à l'autre par un élément porteur (16), au moins un élément de guidage (17, 18) étant disposé au niveau de l'élément porteur (16), lequel au moins un élément de guidage comporte une surface de contact (6, 7, 8) adaptée à la forme de l'élément roulant (4), et une extrémité radialement intérieure (19) de l'au moins un élément de guidage (18) étant située par rapport au chemin de roulement (20) de la bague intérieure (2) à une distance (Y) qui est supérieure à la distance (X) entre l'extrémité radialement interne (21) de l'élément d'extrémité (14) et une surface d'épaulement (22) au niveau de la bague intérieure (2),
**caractérisé en ce que**
au moins un élément d'espacement (23) est disposé au niveau de l'élément d'accouplement (11) ou sur celui-ci, lequel au moins un élément d'espacement limite la mobilité relative entre l'élément d'accouplement (11) et l'au moins un élément de fixation (9 ; 10) dans la direction périphérique.

2. Palier à roulement selon la revendication 1, **caractérisé en ce que** l'élément d'accouplement (11) est un composant de transmission de force de traction qui est cependant dans une large mesure flexible.

3. Palier à roulement selon la revendication 2, **caractérisé en ce que** l'élément d'accouplement (11) est un câble.

4. Palier à roulement selon l'une des revendications 1 à 3, l'élément d'espacement étant conçu à la manière d'un joint torique qui est poussé sur l'élément d'accouplement.

5. Palier à roulement selon l'une des revendications 1 à 4, **caractérisé en ce que** les éléments de fixation (9, 10) sont constitués par des oeillets à travers lesquels l'élément d'accouplement (11) peut être enfilé.

6. Palier à roulement selon l'une des revendications 1 à 5, **caractérisé en ce que** les éléments de fixation (9, 10) sont formés d'une seule pièce au niveau du segment de cage (5).

7. Palier à roulement selon l'une des revendications 1 à 6, **caractérisé en ce que** le segment de cage (5) est conçu sous la forme d'un composant d'une seule pièce.

8. Palier à roulement selon l'une des revendications 1 à 7, **caractérisé en ce que** le segment de cage (5) est en matière synthétique.

9. Palier à roulement selon l'une des revendications 1 à 7, **caractérisé en ce que** les segments de cage (5) sont en un matériau dont le coefficient de dilatation thermique a une valeur qui se situe dans une plage de tolérance de +/- 15 % par rapport au coefficient de dilatation thermique de l'acier, les segments de cage (5) étant notamment en fonte.

10. Palier à roulement selon l'une des revendications 1 à 9, **caractérisé en ce qu'**il s'agit d'un palier à rouleaux, de préférence un palier à rouleaux coniques, un palier à rouleaux cylindriques ou un palier à rotule.
